(19) Europäisches Patentamt
European Patent Office
Office européen des brevets

(11) **EP 4 760 356 A2**

(12) **EUROPEAN PATENT APPLICATION**

(43) Date of publication:
**17.06.2026 Bulletin 2026/25**

(21) Application number: **26164704.4**

(22) Date of filing: **09.11.2023**

(51) International Patent Classification (IPC):
***G01V 1/13*** *(2006.01)*

(52) Cooperative Patent Classification (CPC):
**G01V 1/3808; G01V 1/282; G01V 1/30;**
G01V 2210/1427; G01V 2210/169; G01V 2210/614

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **11.11.2022 US 202263383424 P**

(62) Document number(s) of the earlier application(s) in accordance with Art. 76 EPC:
**23889691.4 / 4 602 403**

(71) Applicants:
• **Services Pétroliers Schlumberger**
**75007 Paris (FR)**
Designated Contracting States:
**FR**
• **GeoQuest Systems B.V.**
**2514 JG The Hague (NL)**
Designated Contracting States:
**AL AT BE BG CH CY CZ DE DK EE ES FI GB GR HR HU IE IS IT LI LT LU LV MC ME MK MT NL NO PL PT RO RS SE SI SK SM TR**

(72) Inventors:
• **VIGH, Denes**
**Houston, TX, 77042 (US)**
• **LE DIAGON, Franck**
**Crawley, RH10 9BU (GB)**
• **ZARKHIDZE, Alexander**
**Crawley, RH10 9BU (GB)**
• **CHENG, Xin**
**Houston, TX, 77042 (US)**

(74) Representative: **Schlumberger Intellectual Property Department**
**Parkstraat 83**
**2514 JG Den Haag (NL)**

Remarks:
This application was filed on 13.03.2026 as a divisional application to the application mentioned under INID code 62.

(54) **DESIGN AND ACQUISITION OF SPARSE OBN USING FULL WAVEFORM INVERSION SENSITIVITY KERNEL ANALYSIS**

(57) A method may include ocean bottom sensor (OBS) acquisition designed for complex earth model building and imaging with full waveform inversion (FWI) technology. Various combinations of OBS source and receiver patterns, as well as source design may be validated with FWI sensitivity kernel analysis technique.

Usually, OBS design is done using conventional methods based on wavelength, frequency requirements, ray tracing and rules of thumps. The method of the disclosed embodiments utilizes OBS design and acquisition combined with FWI sensitivity kernel analysis.

FIG. 1

EP 4 760 356 A2

**Description**

CROSS-REFERENCE TO RELATED APPLICATION

This application claims priority to and the benefit of U.S. Provisional Application No. 63/383,424, filed on November 11, 2022, and entitled, "DESIGN AND ACQUISITION OF SPARSE OBN USING FULL WAVE-FORM INVERSION SENSITIVITY KERNEL ANALY-SIS," which is incorporated herein by reference in its entirety for all purposes.

BACKGROUND

The present disclosure relates generally to performing ocean bottom node (OBN) surveys. More specifically, the present disclosure relates to exploring complex geologic areas by OBN surveys using sparse OBN design and acquisition combined with full waveform inversion (FWI) sensitivity kernel analysis.

This section is intended to introduce the reader to various aspects of art that may be related to various aspects of the present disclosure, which are described and/or claimed below. This discussion is believed to help provide the reader with background information to facilitate a better understanding of the various aspects of the present disclosure. Accordingly, it is understood that these statements are to be read in this light, and not as admissions of prior art.

Seismic exploration in areas having complex geological structures may be challenging. For example, in some regions, such as the Gulf of Mexico, the subsurface layers are often peppered with salt bodies, which are vast accumulations of salt formed millions of years ago deep inside the Earth. Salt is a low-density, buoyant substance, meaning that salt bodies gradually rise through the Earth's crust over time. The salt bodies may cause stress-related complexities between the salt and the surrounding subsurface layers. Furthermore, the salt's crystal structure may cause random reflections of seismic waves (e.g., soundwaves), therefore no sufficiently useable low frequencies are present in the seismic data acquired in the areas having salt bodies.

The majority of seismic data in the areas with complex geology have been acquired with towed streamer geometries (Narrow Azimuth, Wide Azimuth, or full Azimuth with dual coil), which may generate relatively accurate velocity model and image reservoirs. However, certain important details may not be revealed, such as below the complex geological bodies (e.g., subsalt) and at depth. Accordingly, a need exists for a method to derive detailed subsurface velocity models in complex geological areas.

BRIEF DESCRIPTION OF THE DRAWING

These and other features, aspects, and advantages of the present disclosure will become better understood when the following detailed description is read with reference to the accompanying drawings in which like characters represent like parts throughout the drawings, wherein:

FIG. 1 is a schematic diagram of a seismic survey using different seismic measurements based on reflection waves, according to an embodiment of the present disclosure;

FIG. 2 is a schematic diagram of a seismic survey using different seismic measurements based on diving or refraction waves, according to an embodiment of the present disclosure;

FIG. 3 is an example of OBN measurement with a regular pattern of nodes that may be employed in the seismic survey of FIG. 2, according to an embodiment of the present disclosure;

FIG. 4 is an example of OBN measurement with an alternative pattern of nodes that may be employed in the seismic survey of FIG. 2, according to an embodiment of the present disclosure;

FIG. 5 is an example of OBN measurement with an irregular pattern of nodes that may be employed in the seismic survey of FIG. 2, according to an embodiment of the present disclosure;

FIG. 6 is an example of ocean bottom node (OBN) measurement with an irregular pattern of nodes adjusted to subsurface requirements that may be employed in the seismic survey of FIG. 2, according to an embodiment of the present disclosure;

FIG. 7 is an example of OBN measurement with a regular pattern of seismic sources that may be employed in the seismic survey of FIG. 2, according to an embodiment of the present disclosure;

FIG. 8 is an example of OBN measurement with a sparse pattern of seismic sources that may be employed in the seismic survey of FIG. 2, according to an embodiment of the present disclosure;

FIG. 9 is an example of OBN measurement with an irregular pattern of seismic sources that may be employed in the seismic survey of FIG. 2, according to an embodiment of the present disclosure;

FIG. 10 is an example of OBN measurement with an irregular pattern of seismic sources adjusted to subsurface requirements that may be employed in the seismic survey of FIG. 2, according to an embodiment of the present disclosure;

FIGS. 11A, 11B, and 11C are examples of OBN surveys having different node designs that may be employed in the seismic survey of FIG. 2, according to an embodiment of the present disclosure;

FIGS. 12A, 12B, and 12C are examples of OBN surveys having different dense node designs that may be employed in the seismic survey of FIG. 2, according to an embodiment of the present disclosure;

FIGS. 13A, 13B, and 13C are examples of OBN surveys having different sparse node designs that may be employed in the seismic survey of FIG. 2, according to an embodiment of the present disclosure;

FIGS. 14A, 14B, and 14C are examples of OBN surveys having different hybrid node designs that may be employed in the seismic survey of FIG. 2, according to an embodiment of the present disclosure;

FIG. 15 is a flow chart of a FWI process that may be employed to process seismic data acquired in the seismic surveys of FIGS. 11-14, according to an embodiment of the present disclosure;

FIG. 16 is an example of a FWI sensitivity kernel analysis that may use the FWI process of FIG. 15, according to an embodiment of the present disclosure;

FIG. 17 is an example of a concept demonstrating impacts of an offset length on diving waves, according to an embodiment of the present disclosure;

FIG. 18 is an example of analyzing FWI kernel using acoustic or elastic data from pressure or vector measurements, according to an embodiment of the present disclosure;

FIG. 19 is a flow chart of a process for processing the seismic data acquired in the seismic surveys of FIGS. 11-14, according to an embodiment of the present disclosure; and

FIG. 20 is a flow chart of a process for processing legacy seismic data, according to an embodiment of the present disclosure.

DETAILED DESCRIPTION

Certain embodiments commensurate in scope with the present disclosure are summarized below. These embodiments are not intended to limit the scope of the disclosure, but rather these embodiments are intended only to provide a brief summary of certain disclosed embodiments. Indeed, the present disclosure may encompass a variety of forms that may be similar to or different from the embodiments set forth below.

When introducing elements of various embodiments of the present invention, the articles "a," "an," "the," and "said" are intended to mean that there are one or more of the elements. The terms "comprising," "including," and "having" are used in an openended fashion, and thus should be interpreted to mean "including, but not limited to." Also, any use of any form of the terms "connect," "engage," "couple," "attach," or any other term describing an interaction between elements is intended to mean either an indirect or a direct interaction between the elements described. In addition, as used herein, the terms "axial" and "axially" generally mean along or parallel to a central axis (e.g., central axis of a body or a port), while the terms "radial" and "radially" generally mean perpendicular to the central axis. For instance, an axial distance refers to a distance measured along or parallel to the central axis, and a radial distance means a distance measured perpendicular to the central axis. The use of "top," "bottom," "above," "below," and variations of these terms is made for convenience but does not require any particular orientation of the components.

Certain terms are used throughout the description and claims to refer to particular features or components. As one skilled in the art will appreciate, different persons may refer to the same feature or component by different names. This document does not intend to distinguish between components or features that differ in name, but not function.

Prospecting for hydrocarbon deposits (e.g., oil and gas) often involves seismic exploration to determine subterranean geologic structures (e.g., subsurface layers or formations) by means of prospector-induced seismic waves. The seismic exploration may use a seismic survey to acquire seismic data for investigating subterranean structures related to hydrocarbons. For example, during a land (onshore) or a marine (offshore) seismic survey, the prospector-induced seismic waves (e.g., elastic or acoustic waves) may be generated by seismic sources (e.g., dynamite, electric vibrators, or air guns) located at selected shot points. The seismic waves may propagate downward into the subterranean geologic structures, which may change propagation directions (e.g., via reflections or refractions) and physical properties (e.g., amplitudes, phases, polarities) of the seismic waves due to changes in elastic properties (e.g., velocities, densities, or impedances) of the subterranean geologic structures.

For example, the seismic waves may include diving waves that may dive into the subsurface and then turn back again due to a gradual change (e.g., increase) in velocity with depth. Reflected or refracted seismic waves may propagate to pre-deployed sensors (e.g., geophones, accelerometers, hydrophones, fiber-optic sensors) that may detect and convert a portion of elastic or acoustic energy into signals recorded as the seismic data. The seismic data may be used to estimate geophysical properties (e.g., locations, formations, shapes) of the subterranean geologic structures. For example, the seismic data may be used to determine the locations of the subsurface layers or formations based on time intervals elapsing between initiations of seismic waves at the selected shot locations and arrivals of reflected or refracted seismic impulses detected at one or more sensors.

Certain complex geological bodies (e.g., salt bodies) may be within a close proximity to or include important subsurface structures with significant implications for hydrocarbon accumulation and sealing in offshore petroleum reservoirs. Accurate imaging and delineation of such complex geological bodies may be facilitated with the availability of three-dimensional (3D) seismic surveying. However, considering the growth of seismic data size, the efficiency of interpretation may increasingly rely on the development of powerful computational interpretation tools that are capable of mimicking an experienced interpreter's intelligence.

Previously, the majority of the seismic data in the areas with complex geology was recorded using towed streamer acquisitions. For example, in Gulf of Mexico (GOM) areas with vast salt bodies, the seismic data may be acquired using towed streamers with long offsets (e.g., up to 16 km or 18 km). The towed streamer data may yield velocity models and image pre-salt reservoirs with certain levels of accuracy. However, in some areas, such as below the complex geology (e.g., salt bodies), certain subsurface structure details may be missing.

Waveform inversion (e.g., FWI) recently emerged as an advanced method to derive detailed velocity model in any complex environments (e.g., complex salt bodies). The FWI greatly benefits from certain seismic acquisition aspects, such as full azimuth, low frequency contents, and long offsets, which may deliver desired diving waves for FWI to work with. In the past, the towed streamer data was the only data available for FWI until sparse OBN data acquisition became a practical and cost-effective alternative. The sparse OBN data may be superior compared to the towed streamer data quality and easy to extend the offset length. However, it is challenging to evaluate and/or validate FWI for a given geology with a desired acquisition design to take advantage of FWI for velocity or Earth parameter development.

An ocean bottom geometry may be specifically designed to use ultra-long offsets (e.g., exceeding 50 km) for accuracy and efficiency. The sparse ocean bottom geometry may be designed for node density, source density, type of the source, type of shooting (e.g., with simultaneous source approach), size of apertures and haloes, and so on. Sometimes OBN geometries with relatively large distances between nodes is called sparse OBN acquisition. One method to validate such design aspects of the OBN geometry for FWI purposes is an FWI sensitivity kernel analysis technique, which may enable an evaluation of responses of the OBN geometry to the FWI.

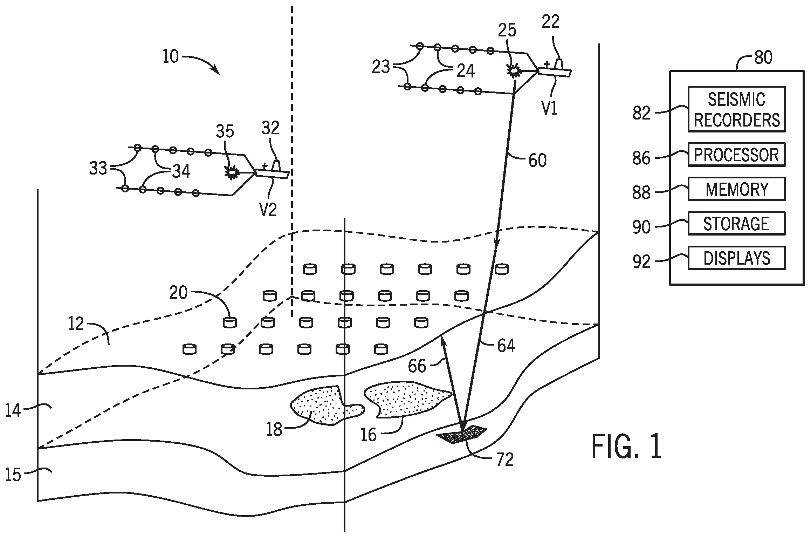

With the preceding in mind, turning now to the figures, FIG. 1 is a schematic diagram of a seismic survey using different seismic measurements based on reflection waves. An area may include a surface 10 and a water bottom 12. Multiple subsurface layers (e.g., subsurface layers 14 and 15) may be located beneath the water bottom 12. Geological structures 16 and 18 with complex geometries, such as salt bodies, may be embedded in the subsurface layers. The geological structures 16 and 18 may be within a close proximity to (e.g., on top of) or enclose a geological formation 72 that may contain hydrocarbon deposits. Seismic data acquired in a seismic survey may be used to image the water bottom 12, the subsurface layers 14 and 15, and the geological structures 16 and 18. Images of subterranean geologic structures may provide indications of the hydrocarbon deposits.

The seismic survey may include OBN measurements by employing multiple OBNs 20 on the water bottom 12. The OBNs may be deployed (e.g., using remotely operated vehicles (ROVs)) to selected locations and form a certain geometry (e.g., regular, irregular, or hybrid geometry). Each of the OBNs 20 may include one or more OBN sensors. The OBN sensors may include one or more geophones (e.g., single-component, two-component, three-component geophones), one or more accelerometers (e.g., micro electromechanical system (MEMS) accelerometers), other suitable seismic sensors that are able to measure ground motions. In some embodiments, the OBN sensors may also include hydrophones. For convenience, this written description refers to ocean bottom nodes in many places, but it is within the scope of this disclosure that when reference is made to an OBN, any type of sensor mechanism or sensor placement technique may be used according to the embodiments disclosed herein when referring to an OBN, e.g., ocean bottom cables with incorporated sensors, optical fibers, and any other sensor placement technique or mechanism that places a sensor on the seabed to detect seismic signals. So the reader with skill in the art will recognize that when referring to OBN in this disclosure, any suitable sensor may be used on a seabed. Moreover, while ocean and seabed are used in this disclosure, the bodies of water in which the disclosed techniques may be used encompass any water-based environment one may perform seismic surveys in, e.g., canals, channels, lakes, gulfs, seas, ponds, rivers, streams, fjords, straits, bays, swamps, inlets, and the like. Thus, the reader with skill in the art will recognize that when referring to ocean and/or seabed in this disclosure, any body of water in which a seismic survey may be conducted is within the scope of the embodiments disclosed herein.

One or more seismic source vessels may be used in the shallow water seismic survey. For example, a source vessel 22 towing a seismic source 25 and another source vessel 32 towing another seismic source 35 may be used to create seismic waves propagating downward into the subterranean geologic structures. Each of the seismic sources 25 and 35 may include one or more source arrays and each source array may include a certain number of air guns.

The seismic survey may also include streamer measurement by employing multiple streamers traversing the area. For example, the source vessel 22 may tow multiple (e.g., two, four, six, eight, or ten) streamers 23 along one sail line, and the source vessel 32 may tow multiple streamers 33 along another sail line. The streamer measurement may be acquired simultaneously with the OBN measurement using shots fired by the seismic sources 25 and 35. Each streamer may include multiple streamer sensors. For example, each of the streamers 23 may include streamer sensors 24 and each of the streamers 33 may include streamer sensors 34. The streamer sensors 24 and 34 may be single or multicomponent and include hydrophones, geophones, and/or accelerometers that create electrical signals in response to water pressure changes caused by reflected seismic waves that arrive at the hydrophones.

During the seismic survey, the seismic source 25 may be activated to generate seismic waves 60 traveling downward into the subterranean geologic structures. When the seismic waves 60 arrives at the water bottom 12, a portion of seismic energy contained in the seismic waves 60 is reflected by the water bottom 12. Reflected waves travel upward and arrive at different sensors, such as the streamer sensors 24 and 34. Another portion of the seismic energy contained in transmitted seismic waves 64 propagates through the water bottom 12 into the subsurface layer 14. A portion of seismic energy contained in the transmitted waves 64 is reflected by the geological formation 72. Reflected waves 66 travel upward and arrive at the different sensors.

The elements described above with regard to the seismic survey are exemplary elements. For instance, some embodiments of the seismic survey may include additional or fewer elements than those shown. In some embodiments, the seismic survey may include more or less of the source vessels. In some embodiments, separated receiver vessels may be used to tow the streamers while one or more source vessels are used to tow the seismic sources. In some embodiments, the streamer measurement may be acquired independently (e.g., in one or more seismic surveys prior to or after an OBN survey) from the OBN measurement for operational or logistical reasons. In some embodiments, legacy data (e.g., streamer data in one or more previous surveys) may be appended to OBN data to complement the OBN to improve a velocity model building (e.g., by further extending a velocity model beyond OBN patch boundaries and/or in a near offset area) and subsequent imaging (e.g., imaging pre-salt reservoirs) using an improved or revised velocity model. In some embodiments, near field hydrophone (NFH) and/or seismic profile (VSP) may be used.

Seismic data simultaneously acquired from different sensors may be collected and processed by a processing system 80. The processing system 80 may include one or more seismic recorders 82, one or more processors 86, a memory 88, a storage 90, and one or more displays 92. The one or more seismic recorders 82 may receive OBN data from OBNs 20, streamer data from streamer sensors 24 and 34, and other seismic data (e.g., NFH data, VSP data). Collected data may be processed by the processor 86 using processor-executable code or instructions stored in the memory 88 and the storage 90. The processed data may be stored in the storage 90 for later usage. The results of the processed data may be displayed via the one or more displays 92.

The processors 86 may include any type of computer processor or microprocessor capable of executing computer-executable code. The processors 86 may include single-threaded processor(s), multi-threaded processor(s), or both. The processors 86 may also include hardware-based processor(s) each including one or more cores. The processors 86 may include general purpose processor(s), special purpose processor(s), or both. The processors 86 may be communicatively coupled to other components (such as one or more seismic recorders 82, interrogator 84, memory 88, storage 90, and one or more displays 92).

The memory 88 and the storage 90 may be any suitable articles of manufacture that can serve as media to store processor-executable code, data, or the like. For example, the memory 88 and the storage 90 may represent non-transitory computer-readable media (e.g., any suitable form of memory or storage) that may store the processor-executable code used by the processor 86 to perform the presently disclosed techniques. It should be noted that non-transitory merely indicates that the media is tangible and not a signal. The memory 88 and the storage 90 may also be used to store data described (e.g., fiber sensor data, geophone data), various other software applications for seismic data analysis and data processing.

The one or more displays 92 may operate to depict visualizations associated with software or executable code being processed by the processor 86. The display 92 may be any suitable type of display, such as a liquid crystal display (LCD), plasma display, or an organic light emitting diode (OLED) display.

The components described above with regard to the processing system 80 are exemplary components and the processing system 80 may include additional or fewer components as shown. For example, the processing system 80 may include one or more communication interfaces to send commands to different seismic acquisition systems and receive measurement from the different seismic acquisition systems.

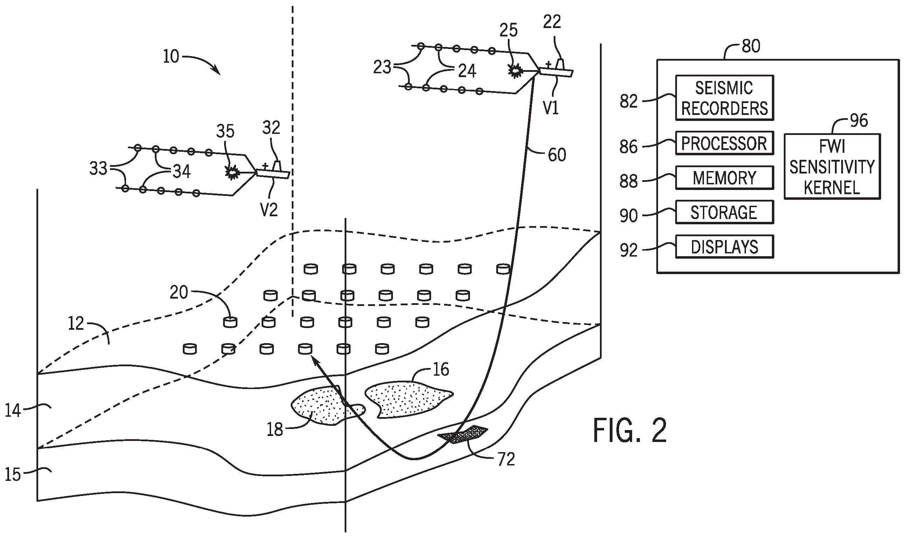

FIG. 2 is a schematic diagram of a seismic survey using different seismic measurements based on diving waves. Certain features and components of illustrated seismic data acquisition may be similar to the seismic data acquisition illustrated in FIG. 1. However, the present embodiment is using the different seismic measurements based on diving waves, instead of the reflection waves. For example, the seismic measurements of FIG. 1 utilize the reflection waves 66, which may be reflected by the geological formation 72 that may contain hydrocarbon deposits, but may not penetrate through the geological structure 18 and reach certain OBNs 20. As such, utilizing the seismic measurements based on the reflection waves may not provide image data regarding subterranean geologic structures that may be indicative of the hydrocarbon deposits associated with the geological formation 72 near the geological structures 16 and 18.

In comparison, the seismic measurements of FIG. 2 utilize the diving waves 100 to provide better penetration towards subterranean geologic structures (e.g., sub-salt structures like geological formation 72), therefore improving the possibility and accuracy of subsurface properties characterization (e.g., subsurface velocity) and as such improved prospecting for hydrocarbon deposits. Diving waves may be referred to as waves that dive into the subsurface and then turn back again (e.g., based on a gradual increase in velocity with depth), without a clear reflection event. The diving waves (e.g., diving waves 100) may dive below the geological structure 16, pass through the geological formation 72, and turn back to penetrate the geological structure 18 and arrive at the OBNs 20 on the water bottom 12. As a result, the diving waves 100 may carry geological information related to the geological formation 72, which may include important information associated with the geological formation 72. The processing system 80 includes an FWI sensitivity kernel 96 that may be used to validate various combinations of sparse OBN source and receiver patterns, as well as source design.

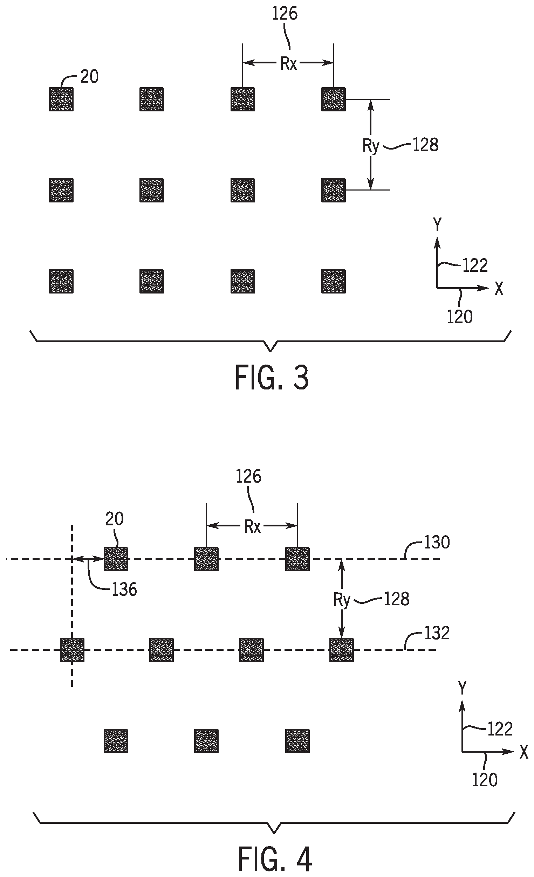

The embodiment of FIG. 2 may utilize different patterns of ocean bottom nodes, such as regular, irregular, or hybrid patterns for OBN data acquisition. Various examples of OBN patterns will be discussed in detail below with reference to FIGS. 3-6.

By way of introduction, OBN survey, such as sparse OBN survey, may be complicated and/or expensive to design, plan and execute. For example, a desired sparse OBN patch may cover sufficiently large area with ocean bottom nodes over geological target and may have an extension of sources (e.g., a halo) beyond the nodes for migration and FWI apertures. A desired OBN survey design may be cost-efficient and capable of delivering a sufficient amount of data to fulfill both imaging and FWI requirements. The density of the nodes may be in the regular or irregular pattern, sparse or dense pattern in X and Y (or inline and crossline) directions.

With the forgoing in mind, FIG. 3 is an example of OBN measurement with a regular pattern of nodes that may be employed in the seismic survey of FIG. 2. In certain embodiments, the regular pattern of nodes may be described as an X-Y grid pattern, wherein the nodes are arranged in parallel rows and columns. In other words, the nodes are aligned with one another in each row in an X direction, and the nodes are aligned with one another in each column in a Y direction. A coordinate system, including a first direction 120 and a second direction 122 perpendicular to the first direction 120 (referred to as X and Y directions, respectively), is used to describe relative spacings between the OBNs 20 on the water bottom 12. For example, a first spacing 126 and a second spacing 128 (referred to as $Rx$ and $Ry$) are used to represent the distance between two adjacent OBNs 20 along the X and Y directions. In present example, the $Rx$ and $Ry$ of adjacent OBNs 20 may be fixed value(s) (e.g., 25, 50, 100, or 250 meters). The $Rx$ and $Ry$ may be same or different.

FIG. 4 is an example of OBN measurement with an alternative pattern of nodes that may be employed in the seismic survey of FIG. 2. The $Rx$ and $Ry$ of adjacent OBNs 20 may be fixed values, but certain adjacent OBNs 20, such as nodes deployed along different lines 132 and 134, may have an offset 136 along the X direction, forming the alternative pattern of nodes. For example, the alternative pattern of nodes may be described as a staggered grid pattern, wherein the nodes are staggered relative to one another from one row to another, from one column to another, or a combination thereof. In the illustrated embodiment, the staggered grid pattern has the nodes aligned with one another in each row in an X direction, while the nodes are staggered with one another in a Y direction. For example, the nodes may be equally spaced relative to one another in each row in the X direction, while each successive row of nodes in the Y direction is shifted or staggered in the X direction relative to a previous row of the nodes. In certain embodiments, any staggered arrangement of the nodes may be used for the staggered grid pattern of the nodes.

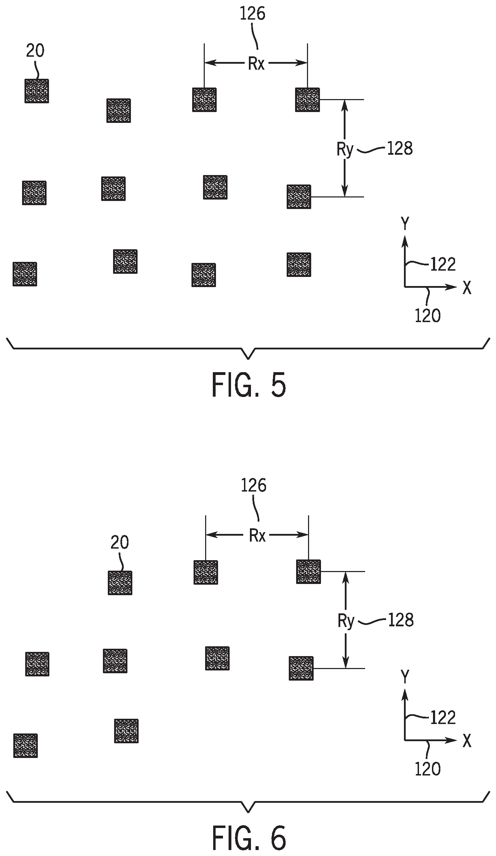

FIG. 5 is an example of OBN measurement with an irregular pattern of nodes that may be employed in the seismic survey of FIG. 2. The irregular pattern of nodes also may be described as an irregular arrangement, group, or distribution of nodes, wherein an irregularity or randomness may define the placement of the nodes relative to the X and Y directions. In the illustrated embodiment, the nodes may be misaligned and/or non-uniformly spaced in the X direction, misaligned and/or non-uniformly spaced in the Y direction, or a combination thereof. The nodes may be arranged differently from one row to another, one column to another, or a combination thereof. In some embodiments, the irregular distribution of nodes results in no well-defined rows or columns in the X-Y space. In this example, the $Rx$ and/or $Ry$ of adjacent OBNs 20 may be different values along X and/or Y directions, forming the irregular pattern of nodes.

FIG. 6 is an example of OBN measurement with an irregular pattern of nodes adjusted to subsurface requirements that may be employed in the seismic survey of FIG. 2. The irregular pattern of nodes of FIG. 6 may have various characteristics as described above with reference to FIG. 5. However, the boundaries, spacings, and placements of nodes varies between the embodiments of FIGS. 5 and 6. For example, an outline or boundary of the OBN patch may be adjusted to match certain subsurface requirements, such as geological constraints, conditions, area of interest, and the like.

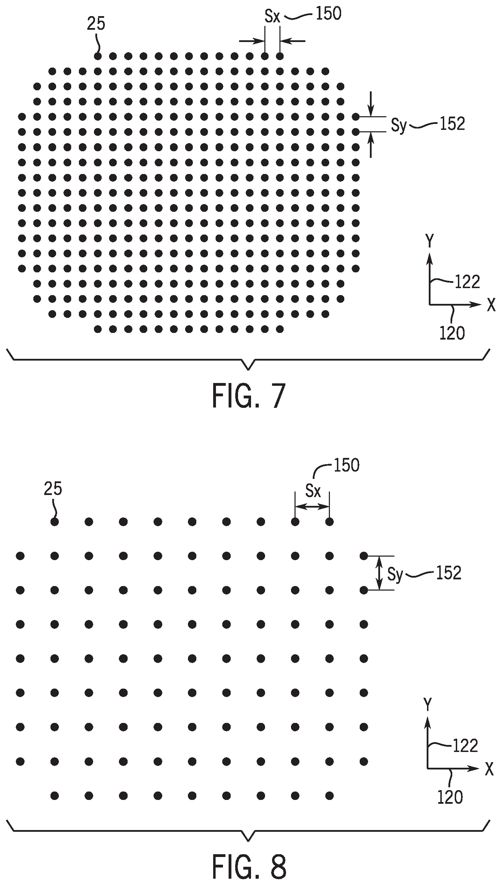

In addition to utilizing different patterns of the ocean bottom nodes as illustrated in FIGS. 3-6, a layout of seismic sources (e.g., seismic source 25 or 35) may also be regular or irregular and may be acquired over the OBN patch described in the examples described above. In some cases, acquiring more sources than necessary may increase the cost and have certain environmental impact. As such, a design of seismic sources, such as the source type and source density may be an important part of an OBN survey (e.g., sparse OBN survey). In some embodiments, the OBN survey may include the same source density over an area, or include variable source density (e.g., halo of sparser source coverage outside a node patch. In some embodiments, source type may be standard or specially designed (e.g., using low frequency sources). For example, the seismic sources may include pneumatic sources (e.g., one large airgun or array of airguns), or marine vibrators. Various examples of seismic source patterns will be discussed in detail below with reference to FIGS. 7-10.

FIG. 7 is an example of OBN measurement with a regular pattern of seismic sources that may be employed in the seismic survey of FIG. 2. The coordinate system, including the first direction 120 and the second direction 122 (referred to as X and Y directions, respectively), is used to describe relative spacings between the seismic sources 25 on the water bottom 12. In certain embodiments, the regular pattern of seismic sources may be described as an X-Y grid pattern, wherein the seismic sources are arranged in parallel rows and columns. In other words, the seismic sources are aligned with one another in each row in an X direction, and the seismic sources are aligned with one another in each column in a Y direction. For example, a first spacing 150 and a second spacing 152 (referred to as *Sx* and *Sy)* are used to represent the distance between two adjacent seismic sources 25 along the X and Y directions. In present example, the *Sx* and *Sy* of adjacent seismic sources 25 may be fixed values (e.g., 5, 10, 25, 50 meters). The Sx and *Sy* may be same or different.

FIG. 8 is an example of OBN measurement with a sparse pattern of seismic sources that may be employed in the seismic survey of FIG. 2. In the illustrated embodiment, the sparse pattern of seismic sources may be a grid pattern as discussed above with reference to FIG. 7; however, the spacing of the seismic sources in FIG. 8 is greater than the spacing of the seismic sources in FIG. 7. The *Sx* and *Sy* of adjacent seismic sources 25 may be fixed value(s) greater than the *Sx* and *Sy* of FIG. 7, such as at least equal to or greater than 10, 15, 20, or 25 meters, forming the sparse pattern of seismic sources. In certain embodiments, the spacing (e.g., *Sx* and/or *Sy)* of seismic sources in FIG. 8 may be at least equal to or greater than 1.5, 2, 2.5, 3, 3.5, 4, 4.5, 5, or 10 times the spacing (e.g., *Sx* and/or *Sy)* of seismic sources in FIG. 7.

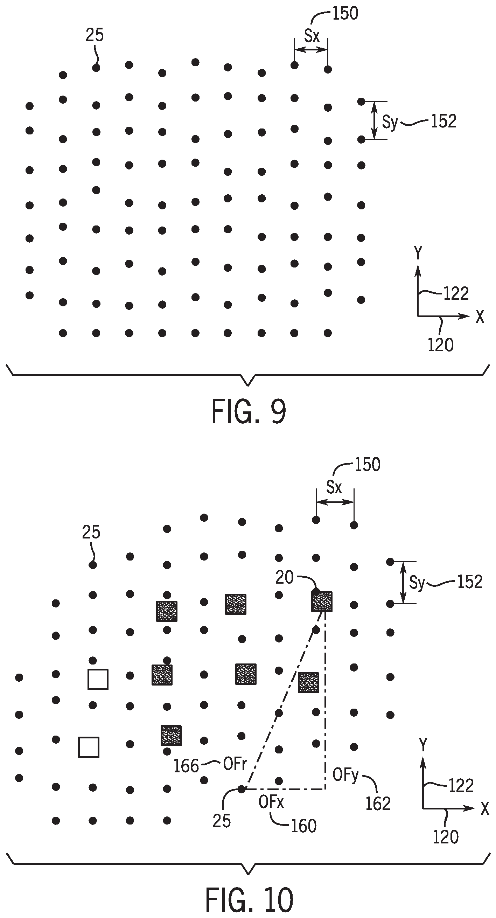

FIG. 9 is an example of OBN measurement with an irregular pattern of seismic sources that may be employed in the seismic survey of FIG. 2. The irregular pattern of seismic sources also may be described as an irregular arrangement, group, or distribution of seismic sources, wherein an irregularity or randomness may define the placement of the seismic sources relative to the X and Y directions. In the illustrated embodiment, the seismic sources may be misaligned and/or non-uniformly spaced in the X direction, misaligned and/or non-uniformly spaced in the Y direction, or a combination thereof. The seismic sources may be arranged differently from one row to another, one column to another, or a combination thereof. In some embodiments, the irregular distribution of seismic sources results in no well-defined rows or columns in the X-Y space. In this example, the *Sx* and *Sy* of adjacent seismic sources 25 may be different values along X and/or Y directions, forming the irregular pattern of seismic sources.

FIG. 10 is an example of OBN measurement with an irregular pattern of seismic sources adjusted to subsurface requirements that may be employed in the seismic survey of FIG. 2. The irregular pattern of seismic sources of FIG. 10 may have various characteristics as described above with reference to FIG. 9. However, the boundaries, spacings, and placements of seismic sources varies between the embodiments of FIGS. 9 and 10. For example, in the illustrated embodiment of FIG. 10, an outline or boundary of the seismic sources patch may be adjusted to match the subsurface requirements, such as geological constraints, conditions, area of interest, and the like. A first offset 160 and a second offset 162 (referred to as *OFx* and *OFy)* are used to represent the spacings between an ocean bottom node 20 and a seismic source 25 along the X and Y direction. A third offset 166 (defined as square root of $(OFx)^2 + (OFy)^2$)) is used to represent the distance between the ocean bottom node 20 and the seismic source 25.

In an OBN survey, a grid of OBNs 20 may be dense or sparse. In a case of sparse node spacing, to correctly sample the diving waves (e.g., diving waves 100), a sampling cannot exceed a ratio of the wavelength $\lambda$ of the diving waves., which is a function of the earth velocity V, and the frequency F, as described in the following equation:

$$\lambda = V / F.$$

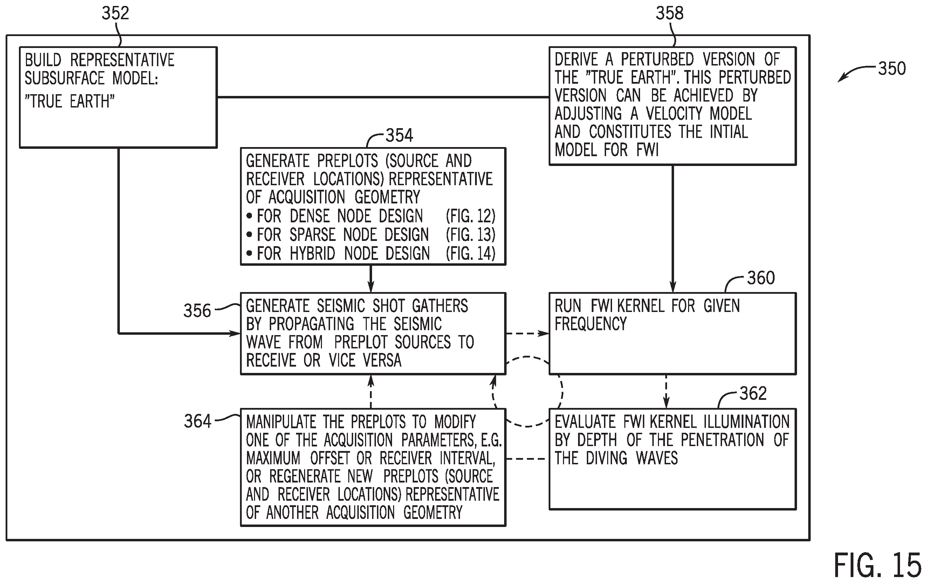

For example, for a velocity of 3000 meter/s, a low frequency of 1.5 Hz and a sampling with the ratio around 2, the maximum sampling may be of the range 800 meters to 1600 meters. However, FWI may cope with even sparser node spacings, so the final sampling may ultimately be modeled by implementing an FWI kernel sensitivity method that will be discussed in detail below with reference to FIGS. 15-19.

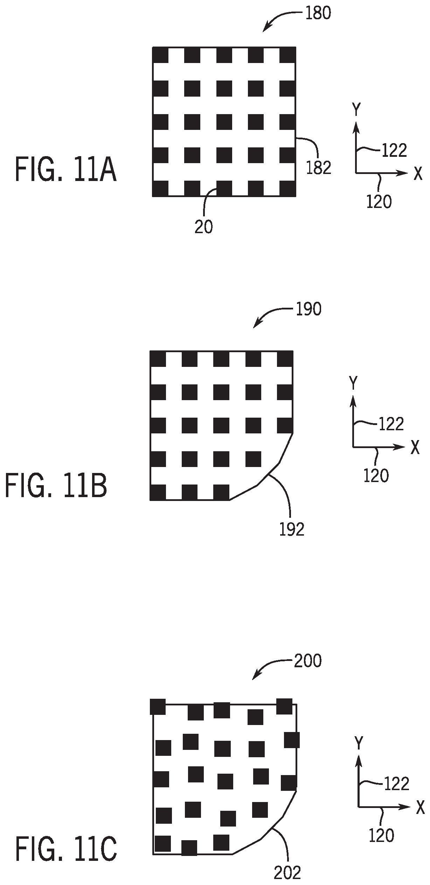

Ocean bottom nodes may be spaced on a regular grid (e.g., rectangular grid), adjusted to a survey area, or on an irregular grid adjusted to the subsurface requirements. Density of the ocean bottom nodes may vary based on an objective of the survey and may include a combination of denser and sparser node densities on the regular or irregular grid adjusted to the survey area and subsurface objectives. Various examples of OBN surveys will be discussed in detail below with reference to FIGS. 11-14.

FIGS. 11A, 11B, and 11C are examples of OBN surveys having different node designs that may be employed in the seismic survey of FIG. 2. A first node patch 180 includes the OBNs 20 spaced on a rectangular grid 182. The first node patch 180 may have various characteristics as discussed above with reference to FIG. 3. A second node patch 190 includes the OBNs 20 that are adjusted to a node area 192. The second node patch 190 may be substantially the same as the first node patch 180, wherein a portion of the nodes are removed at the node area 192. A third node patch 200 includes the OBNs 20 spaced on an irregular grid 202 adjusted to certain subsurface requirements (e.g., geological constraints, conditions, area of interest, and the like). The third node patch 200 may have various characteristics as discussed above with reference to FIGS. 5 and 6.

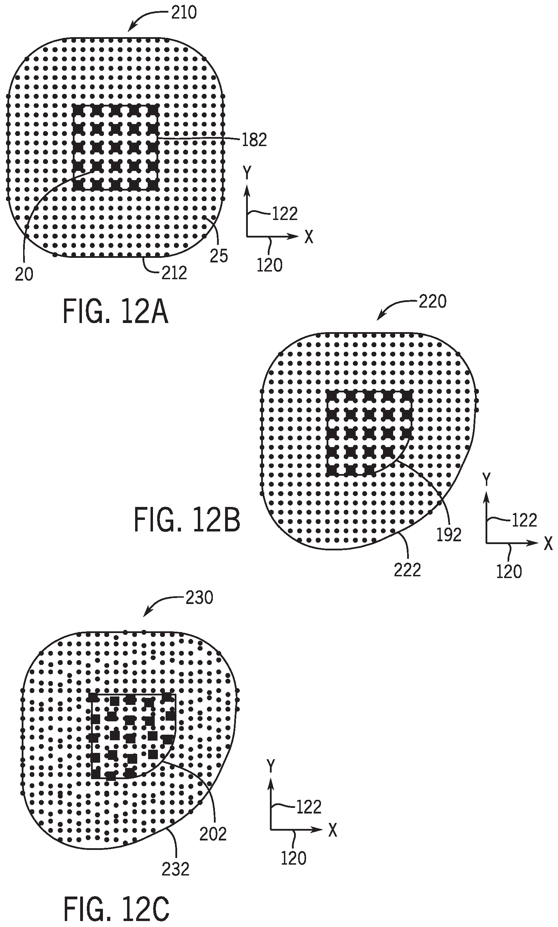

The density of the ocean bottom nodes may vary based on the objective of the survey. FIGS. 12A, 12B, and 12C are examples of OBN surveys having different dense node designs that may be employed in the seismic survey of FIG. 2. A first OBN survey 210 includes the OBNs 20 spaced on the rectangular grid 182 with dense node spacing as discussed above with reference to FIG. 11A, and the seismic sources 25 spaced on a regular grid 212. A second OBN survey 220 includes the OBNs 20 adjusted to the node area 192 with dense node spacing as discussed above with reference to FIG. 11B, and the seismic sources 25 spaced on a source area 222 that is adjusted accordingly with respect to the node area 192. A third OBN survey 230 includes the OBNs 20 spaced on the irregular grid 202 adjusted to the subsurface requirements as discussed above with reference to FIG. 11C, and the seismic sources 25 spaced on a source area 232 that is adjusted accordingly with respect to the irregular grid 202. The third OBN survey 230 may include irregular pattern of seismic sources 25 adjusted to the subsurface requirements.

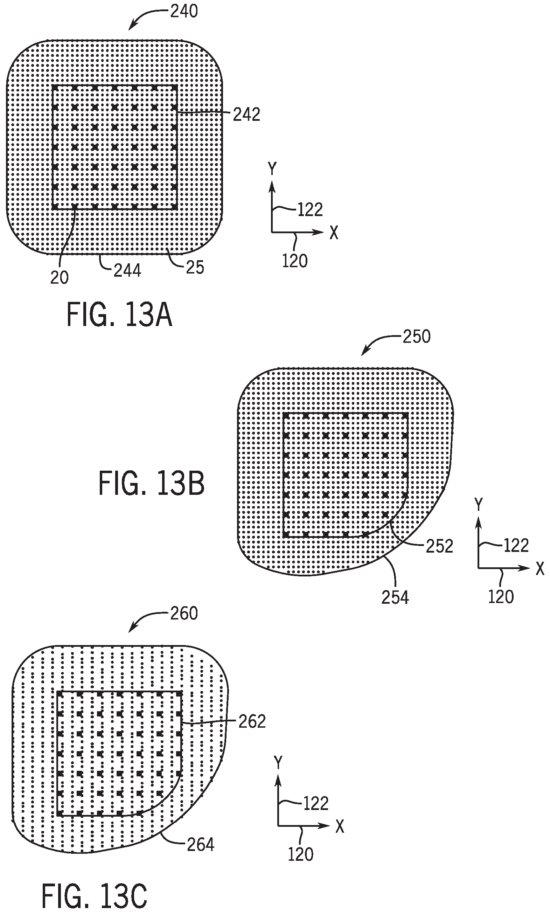

FIGS. 13A, 13B, and 13C are examples of OBN surveys having different sparse node designs that may be employed in the seismic survey of FIG. 2. A first sparse OBN survey 240 includes the OBNs 20 spaced on a sparse rectangular grid 242 with sparse node spacing, and the seismic sources 25 spaced on a regular source grid 244. The OBNs 20 of FIG. 13A are arranged similar to the OBNs 20 of FIGS. 11A and 12A, wherein the OBNs 20 of FIG. 13A are spaced further apart from one another than the OBNs of FIGS. 11A and 12A. A second sparse OBN survey 250 includes the OBNs 20 adjusted to a node area 252 with sparse node spacing (e.g., substantially the same as FIG. 13A with the adjustment in the node area 252), and the seismic sources 25 spaced on a source area 254 that is adjusted accordingly with respect to the node area 252. The OBNs 20 of FIG. 13B are arranged similar to the OBNs 20 of FIGS. 11B and 12B, wherein the OBNs 20 of FIG. 13B are spaced further apart from one another than the OBNs of FIGS. 11B and 12B. A third sparse OBN survey 260 includes the OBNs 20 spaced on a regular grid 262 adjusted to the subsurface requirements (e.g., substantially the same as FIG. 13B), and the seismic sources 25 spaced on a source area 264 that is adjusted accordingly with respect to the irregular grid 262. The third sparse OBN survey 260 may include irregular pattern of seismic sources 25 adjusted to the subsurface requirements.

In some embodiments of sparse OBN survey, the OBNs 20 may be spaced apart from one another by distances between 800 meters to 1600 meters. In some embodiments, the OBNs 20 may be spaced apart from one another by other distance ranges, such as 400 meters to 3000 meters, 500 meters to 2500 meters, 600 meters to 2000 meters, 700 meters to 1800 meters, or 600 meters to 1600 meters.

In some embodiments, the grid of seismic sources 25 may be dense to improve the signal to noise (S/N) ratio of recorded seismic data, such as the examples of OBN surveys described in FIGS. 12 and 13. As such, seismic sources 25 may be separated by a smaller fraction of the wavelength (e.g., 50 meters, 100 meters, or any other suitable intervals). In some embodiments, multiple seismic sources towed by a vessel may be separated by a desired distance and fired in a distance or time mode at a desired rate, which may ultimately produce a regular or irregular grid of sources.

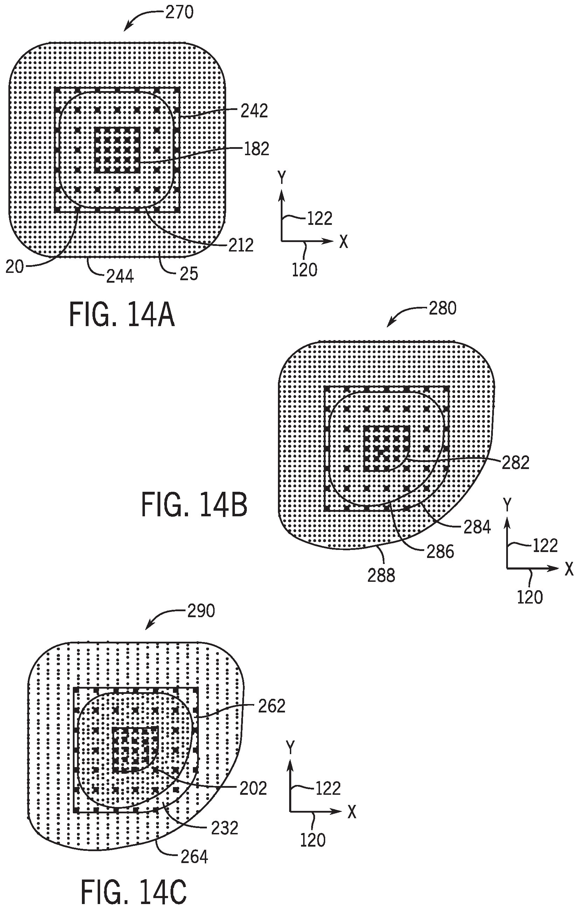

In some cases, an OBN survey may include a combination of dense and sparse node densities on the regular or irregular grid adjusted to the survey and subsurface objectives. FIGS. 14A, 14B, and 14C are examples of OBN surveys having different hybrid node designs that may be employed in the seismic survey of FIG. 2. For example, a first hybrid OBN survey 270 includes the OBNs 20 spaced on the rectangular grid 182 with dense node spacing and the sparse rectangular grid 242 with sparse node spacing, and the seismic sources 25 spaced on the regular source grids 212 and 244. A second hybrid OBN survey 258 includes the OBNs 20 adjusted to an internal node area 282 with dense node spacing and an external node area 284 with sparse node spacing, and the seismic sources 25 spaced on an internal source area 286 and an external source area 288 that are adjusted accordingly with respect to the internal node area 282 and external node area 284, respectively. A third hybrid OBN survey 290 includes the OBNs 20 spaced on the irregular grid 202 and the regular grid 262 adjusted to the subsurface requirements, and the seismic sources 25 spaced on the source area 232 and the source area 264 that are adjusted accordingly with respect to the irregular grid 202 and the regular grid 262, respectively. The third hybrid OBN survey 290 may include an irregular pattern of seismic sources 25 adjusted to the subsurface requirements.

To improve the efficiency of the seismic source effort, in some embodiments, the number of source vessels, the number of sources per vessel, the separation between sources, the speed of the source vessel, or any combination thereof, may be increased. In some embodiments, simultaneous shooting, modification of the source firing scheme, and overall source grid separation may vary along the OBN survey (e.g., the third hybrid OBN survey 290). For example, different pneumatic sources activated with time delays may be used to improve efficiency and illumination of the subsurface formations. The designed time delays may be in a range from zero to a duration that may extend beyond the maximum reflection time from the deepest event of interest.

To improve the frequency content, in some embodiments, a mixing of different types of seismic sources towed by the same or by different vessels and fired simultaneously or independently may be used in the OBN survey. In some embodiments, an implementation using low frequency sources may compensate some sparsity in the source or even receiver grid. In some embodiments, ocean bottom data may be acquired for the FWI analysis with the low frequency sources, wherein a source line interval between multiple source lines is at least equal to or greater than 600 meters.

The spatial extent of seismic sources around the grid of ocean bottom nodes may be driven by offsets (e.g., distance between a source and a node) based diving wave penetrations. For instance, a depth of diving wave penetration may be equal to around one third of the maximum source to receiver offset and may be equal to or greater than 50 kilometers.

With the preceding in mind, FIG. 15 is a flow chart of a FWI process or workflow 350 that may be employed to process seismic data acquired in the seismic surveys of FIGS. 11-14. In addition to using conventional techniques (e.g., techniques based on resolution, sampling, expected wavelength, and so on) in a sparse OBN survey design, the disclosed embodiments utilize an FWI sensitivity analysis to properly model the penetration of the diving waves and derive the desired extension of sources (e.g., a source halo representing an area of a source patch greater than an OBN patch). Various OBN survey related parameters, such as the parameters related to source type, ocean bottom node grid density, and source grid density may be evaluated using the FWI sensitivity analysis.

To evaluate different acquisition geometries for FWI-based model updating, at block 352, the FWI workflow 350 may be executed by the processor 86 of the processing system 80 to build the FWI subsurface model (e.g., a true earth model representing a real geologic cross section) based on prior knowledge in the area of interest. At block 354, the FWI workflow 350 may be executed by the processor 86 of the processing system 80 to generate pre-plots that include seismic source and receiver (e.g., ocean bottom node) locations representative of an acquisition geometry, such as the dense node designs of FIGS. 12A, 12B, and 12C, the sparse node designs of FIGS. 13A, 13B, and 13C, and the hybrid node designs of FIGS. 14A, 14B, and 14C.

At block 356, the FWI workflow 350 may be executed by the processor 86 of the processing system 80 to generate seismic shot gathers by propagating the seismic waves from pre-plot sources to receivers, or vice versa. At block 358, the FWI workflow 350 may be executed by the processor 86 of the processing system 80 to derive a perturbed version of the true earth model to constitute an initial model for FWI-based model updating. In general, deriving a perturbed version of the true earth model may include adjusting one or more models associated with the true earth model. For example, the earth model may include a velocity model. As such, generating the perturbed version of the true earth model may include adjusting the velocity model by 1%, 2%, 3%, 4%, 5%, or more than 5%.

After perturbing the velocity field, at block 360, the FWI workflow 350 may be executed by the processor 86 of the processing system 80 to run FWI kernel for given frequencies. For example, the FWI workflow 350 may run a low-frequency FWI on the initial model to capture the FWI kernel with different sparse OBN acquisition geometries. At block 362, the FWI workflow 350 may be executed by the processor 86 of the processing system 80 to evaluate FWI kernel illumination by depth of the penetration of the diving waves. The kernel or diving wave illumination may be created by perturbing the initial model and evaluated by running a given frequency FWI kernel to determine how the FWI kernel illuminates the subsurface and the deep part of the model. The perturbation may be sufficiently small enough to avoid possible cycle skipping and/or one directional problem (positive or negative) to obtain a clear result of the illumination of the given sparse node geometry in a planned geological environment.

At block 364, the FWI workflow 350 may be executed by the processor 86 of the processing system 80 to manipulate the pre-plots to modify one of the OBN acquisition parameters, such as maximum offset or receiver interval, or regenerate new pre-plots representative of another OBN acquisition geometry. In some embodiment, base line data may be created with the assumed geology and the FWI kernel is run on the perturbed model.

The methodology described above may enable evaluations of various aspects of a sparse OBN survey geometry, node density, source spacing, type of the source via the FWI kernel, and selecting the most appropriate combination of the acquisition parameters. With this methodology, the sparse node parameters may be optimized to get a cost-effective solution at given source configuration (e.g., low frequency content of the source).

FWI may be applied to various data collection and processing systems, especially with the previously described methodology. The power of FWI may depend on several components, including but not limited to the low-frequency content of observed data, the length of the maximum offset, and the azimuthal distribution of the offsets. Long offset and full azimuthal data may be obtained by a nodal acquisition, which is, by default, full azimuthal all the way up to the design nominal offset (e.g., equal to or greater than 50 kilometers). The low-frequency content of the data may be related to the source type. In certain embodiments, ultra-low frequency sources may be used to produce frequencies down to 0.1 Hz, or down to 0.3 Hz, or down to 0.5 Hz, or down to 1 Hz, or down to 1.5. In certain embodiments, the low-frequency sources may contain frequencies up to 30 Hz, or up to 40 Hz, or up to 100 Hz.

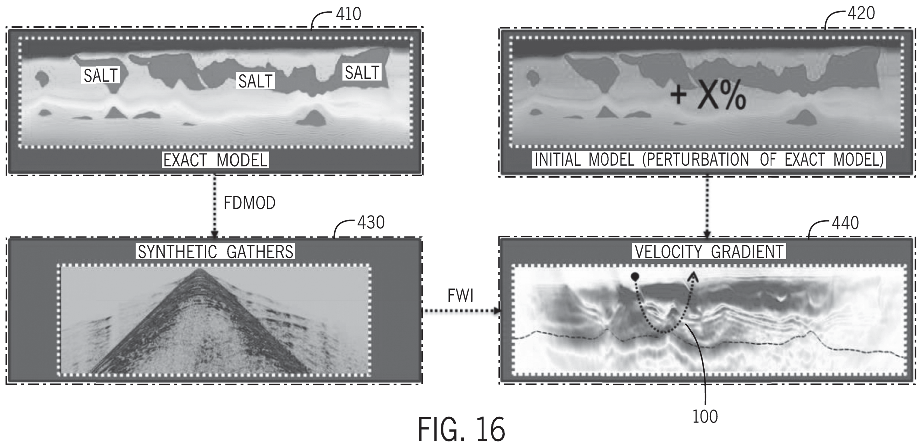

FIG. 16 is an example of a FWI sensitivity kernel analysis that may use the FWI workflow of FIG. 15. An image 410 illustrates an exact model (e.g., true earth model) including salt bodies that may be built at the block 352. An image 420 illustrates an initial model (e.g., perturbation of the exact model) that may be derived at block 358. An image 430 illustrates synthetic shot gathers generated by propagating the seismic waves from the pre-plot sources to receivers, or vice versa, as described at block 356. The synthetic shot gathers may be used to run FWI kernel for a given frequency, resulting velocity gradient is illustrated in an image 440, which shows a path of the diving wave 100.

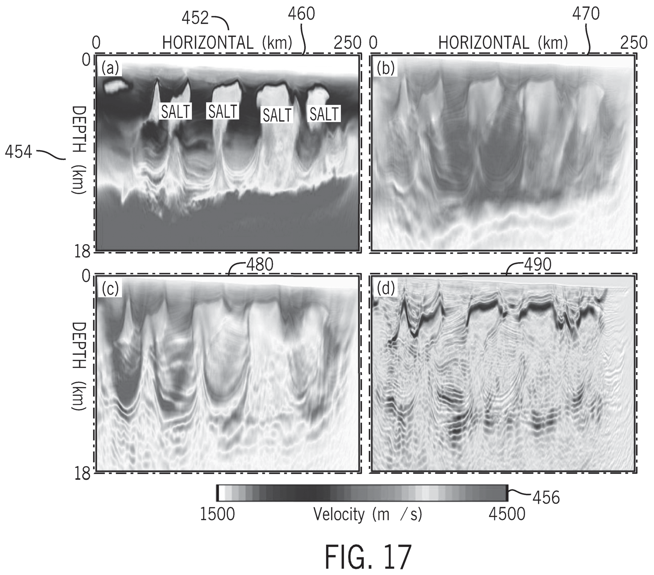

FIG. 17 is an example of a concept demonstrating impacts of an offset length on diving waves, such as the impacts the diving wave illumination at 2 Hz and 1 kilometer node spacing. A horizontal axis 462 is representative of the offset length (in kilometers) and a vertical axis 464 is representative of depth of subsurface images (in kilometers). A color map 456 is representative of velocity values (e.g., of different subsurface layers or structures).

An image 460 illustrates a velocity model (including multiple salt bodies) used in the FWI sensitivity kernel analysis. An image 470 illustrates a first FWI sensitivity kernel associated with 1-kilometer OBN spacing and 50 kilometers maximum offset at 2 Hz. An image 480 illustrates a second FWI sensitivity kernel associated with 1-kilometer OBN spacing and 22 kilometers maximum offset at 2 Hz. An image 490 illustrates a third FWI sensitivity kernel associated with wide azimuth (WAZ) shooting geometry and 8 kilometers maximum offset at 2 Hz. These images demonstrate that when the offset length is increased (e.g., from 8 kilometers to 22 kilometers, and further to 50 kilometers), the diving waves produce deeper and deeper penetration. For example, when the offset length extends to 50 kilometers, the penetration of the diving waves can be seen at a basement level. Furthermore, the nodal gather has lots of surface multiple bounces that may constrain the FWI updates versus the streamer acquisition that has simpler surface multiple paths than the OBN data collection. This method of FWI kernel illumination may allow for optimally designing sparse OBN surveys to take full advantage of the FWI power to develop earth models and to address exploration and development goal for the users.

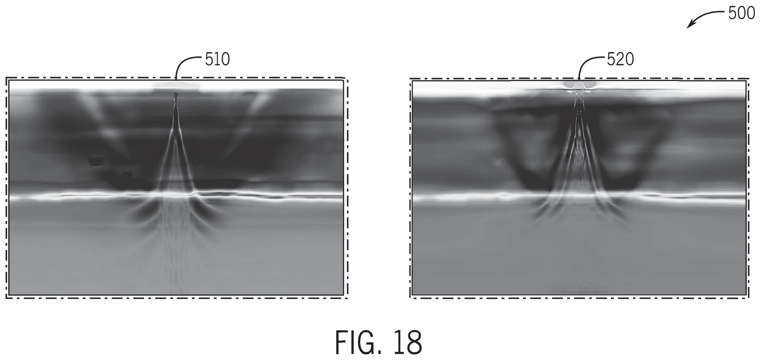

The FWI kernel analysis may be used to analyze acoustic data or elastic data. FIG. 18 is an example of FWI kernel analysis using acoustic or elastic data from pressure or vector measurements. An image 510 illustrates a compressional wave velocity (Vp) FWI sensitivity kernel using one shot. Another image 520 illustrates a shear wave velocity (Vs) FWI sensitivity kernel using one shot.

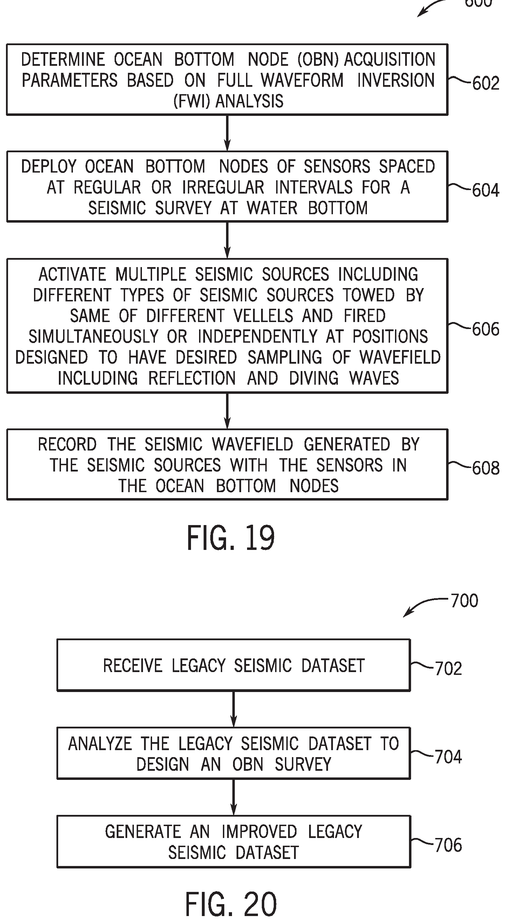

FIG. 19 is a flow diagram of a process 600 for processing the seismic data acquired in the seismic surveys of FIGS. 11-14. Although the method described in FIG. 19 is described in a particular order and as being performed by a particular component, it should be understood that the method may be performed in any suitable order and by any suitable computing device or application.

Referring now to FIG. 19, at block 602, the processor 86 of the processing system 80 may determine OBN acquisition parameters based on a FWI analysis. At block 604, the processor 86 of the processing system 80 may deploy ocean bottom nodes of sensors spaced at regular or irregular intervals for a seismic survey at the water bottom.

At block 606, the processor 86 of the processing system 80 may activate multiple seismic sources including different types of seismic sources towed by same or different vessels and fired simultaneously or independently at positions designed to have desired sampling of wavefields including reflection and diving waves. At block 608, the processor 86 of the processing system 80 may record the seismic wavefields generated by the seismic sources with the sensors in the ocean bottom nodes.

Although certain specific values (e.g., 10-, 15-, 20-, or 25-meters source spacing, 25-, 50-, 100-, or 250-meters node spacing) are used to describe disclosed embodiments, they should be understood as approximate values and may be more or less than 5-10% of the listed values.

In order to further constrain a velocity model building in a source halo (e.g., an area of a source patch greater than an OBN patch) dominated by long offsets only and/or in an area with limited source coverage (e.g., a near offset area within the OBN patch), in certain embodiments, legacy data may be appended to the sparse OBN data to complement the sparse OBN data to further extend the validity of the model beyond the node patch boundaries and/or in the near offset area.

For example, in some embodiments, higher frequency contents associated with subsurface layers or structures in the legacy data may be added in the velocity model building. In some embodiments, the sparse OBN data may have certain gaps (e.g., in data coverage with respect to offsets) due to limited near offset data coverage. Such gaps may be filled with the legacy data. Appending the legacy data to the sparse OBN data may provide an extended velocity model having more frequency coverage in a wide offset range including near, middle, and far offsets with improved velocity accuracy using denser data samplings and wider data coverage in the legacy data. The data appending may result in more fully imaged volumes (e.g., image volumes of pre-salt reservoirs in complex environments) and an extended reflectivity field associated with subsurface layers or structures based on the extended velocity model resulted from the data appending.

In some embodiments, the seismic wavefields generated by seismic sources with a sparse pattern of seismic sources may be used to increase the accuracy, resolution, or otherwise improve a legacy data (e.g., legacy seismic data, legacy streamer data). As discussed herein, the legacy data may include one or more legacy seismic datatype, such as a velocity model, frequency content information, diving wave information, noise information, geologic information, acquisition geometry information, and seismic data associated with a survey area. Accordingly, the legacy data and sparse OBN data may be used to generate an improved legacy data. As an illustration, FIG. 20 is a flow diagram of a process 700 for processing the seismic data acquired in the seismic surveys of FIGS. 11-14.

Referring now to FIG. 20, at block 702, the processor 86 of the processing system 80 may receive legacy data. In general, legacy data may be historical streamer data acquired in one or more previous seismic surveys in the same area of interest.

At block 704, the processor 86 of the processing system 80 may analyze the legacy data based at least in part on the at least one legacy seismic datatype to design for a survey area, an OBN survey that complements the legacy data. For example, the OBN survey may indicate OBN survey related parameters, such as the parameters related to source type, ocean bottom node grid density, and source grid density. In any case, the processor 86 may evaluate the OBN survey using the FWI sensitivity analysis. The processor 86 may determine OBN placement information that is indicative of OBN placement locations and/or seismic source shot locations within the survey area. As such, the OBN placement information may indicate a physical location of the survey area.

In any case, in some instances, the process 700 may include, at block 706, generating an improved legacy seismic datatype based on a perturbation of the at least one legacy seismic data type, the seismic wavefields, or both. In general, to perform block 706, the processor 86 may use seismic wavefields that were generated by a plurality of seismic sources and collected by a plurality of OBN sensors. In some embodiments, the plurality of seismic sources and/or OBN sensors may be arranged in a sparse geometry and/or pattern. Accordingly, in some embodiments, the process 700 may include deploying ocean bottom nodes with sensors, activating seismic sources, and recording seismic wavefields generated by the seismic sources using the sensors of the ocean bottom nodes. At least in some instances, the processor 86 may receive the OBN survey.

In some embodiments, the processor 86 may receive the seismic waveforms corresponding to the survey area. In turn, the seismic waveforms may be used to improve, revise, or refine the legacy data. For example, the legacy seismic datatype may be used in conjunction with the perturbed model (e.g., the initial model 402). In some embodiments, the processor 86 may use a legacy data (e.g., legacy velocity model) in conjunction with well data and additional information to build a representative model of the area of interest that is consecutively used to generate a synthetic dataset (e.g., synthetic seismic data), which is then fed into the FWI kernel or diving wave illumination analysis. The velocity model may be used after perturbation as an initial model for the FWI kernel or diving wave illumination analysis.

It is presently recognized that the two datasets (e.g., the legacy data and sparse OBN corresponding to the OBN survey) may contribute to different portions of the improved legacy data. For example, the sparse OBN may contribute relatively more to the low-wavenumber portion of the image spectrum, while the legacy data contributes relatively more to the high-wavenumber portion of the image spectrum. As such, the joint inversion of legacy data with sparse OBN improves the recoverable bandwidth of the FWI kernel. In particular, it is presently recognized that the sampling deficit corresponding to sparse OBN node spacing could be complemented by the dense source sampling from the legacy data, which occurs when inversion moves up the frequency band progressively.

The outputs of the process 700 may be used for one or more additional operations described below. For example, the processor 86 may generate a new seismic dataset associated with the survey area using the improved legacy seismic datatype. In particular, the OBN survey may aid a user in refining, revising, or improving the legacy data. Accordingly, the new seismic dataset generated using the improved legacy seismic datatype may be more accurate as compared to a seismic dataset generated using the legacy seismic datatype alone. In some embodiments, the improved legacy seismic datatype may include an improved velocity model (e.g., revised velocity model). For example, the processor 86 may perturb a velocity model by adjusting the velocity model in a generally similar manner as described with respect to block 358. Accordingly, the processor 86 may use the improved velocity model to reprocess the legacy data.

Additionally or alternatively, the processor 86 may generate a model using the legacy seismic datatype corresponding to the legacy data at block 702. For example, the legacy seismic datatype may include a legacy velocity model. Accordingly, to generate the model, the processor 86 may generate a synthetic dataset using the velocity model. For example, the processor 86 may perturb the velocity model to generate a perturbed velocity model (e.g., the initial model 420). After generating the perturbed velocity model, the processor 86 may analyze a diving wave illumination associated with the survey area using the synthetic dataset. In some embodiments, the processor 86 may analyze an FWI kernel illumination associated with the survey area using the synthetic dataset.

Additionally or alternatively, the processor 86 may jointly invert the OBN survey and the legacy data to form a joint seismic dataset. In some embodiments, the processor 86 may jointly migrate the OBN survey and the legacy data to form a joint seismic dataset. In any case, the processor 86 may cause a display to display the joint seismic dataset.

Accordingly, the process 700 provides an improved legacy seismic datatype using sparse OBN data. It is presently recognized that analysis of the legacy data in accordance with process 700 may provide information for the design of the sparse OBN acquisition, including frequency content analysis, velocity analysis, diving wave analysis, and noise analysis.

The foregoing description, for purpose of explanation, has been described with reference to specific embodiments. However, the illustrative discussions above are not intended to be exhaustive or to limit the disclosure to the precise forms disclosed. Many modifications and variations are possible in view of the above teachings. Moreover, the order in which the elements of the methods described herein are illustrated and described may be re-arranged, and/or two or more elements may occur simultaneously. The embodiments were chosen and described in order to best explain the principals of the disclosure and its practical applications, to thereby enable others skilled in the art to best utilize the disclosure and various embodiments with various modifications as are suited to the particular use contemplated.

The subject matter described in detail above may be defined by one or more clauses, as set forth below.

Clause 1: In certain embodiments, a method is provided for performing a seismic survey. The method includes deploying ocean bottom sensors at a water bottom in a seismic survey, where the ocean bottom sensors are spaced at regular or irregular intervals. The method includes activating seismic sources at multiple positions to provide sampling of seismic wavefields including reflection waves and diving waves, where the seismic sources includes different types of seismic sources towed by the same or by different vessels and fired simultaneously or independently. The method includes recording, via the ocean bottom sensors, the seismic wavefields generated by the seismic sources. The method includes determining parameters associated with the ocean bottom sensors and the seismic sources based at least on a FWI analysis.

Clause 2: The method of the preceding clause (e.g. Clause 1), wherein the seismic sources is deployed in an area equal to or greater than a patch of the plurality of ocean bottom sensors, where the ocean bottom sensors record the diving waves from depths that propagate at a distance from the seismic sources.

Clause 3: The method of any preceding clause (e.g. Clause 2), comprising appending historical streamer data acquired in one or more previous seismic surveys to extend a model beyond boundaries of the patch of the plurality of ocean bottom sensors, wherein the historical streamer data is appended to complement ocean bottom sensor data generated by recording the seismic wavefields generated by the plurality of seismic sources deployed in the area greater than the patch of the plurality of ocean bottom sensors.

Clause 4: The method of any preceding clause (e.g. Clause 1), wherein the FWI analysis is performed using an FWI kernel or diving wave illumination analysis tool and baseline data created with a predefined geology, where the FWI kernel or diving wave illumination analysis tool is run on a perturbed model derived from an initial model representative of the predefined geology at a given frequency to determine an FWI kernel illumination of subsurface and deep parts of the perturbed model, where the perturbation is configured to avoid or reduce cycle skipping and one-directional (positive or negative) to obtain a robust long-wavenumber update with the FWI kernel indicating illumination of a given ocean bottom sensor geometry in a planned geological environment.

Clause 5: The method of any preceding clause (e.g. Clause 1), wherein the seismic sources include low frequency sources to compensate for a sparsity in a source or ocean bottom sensor grid, where the low frequency sources generate low frequencies down to 0.5 Hz.

Clause 6: The method of any preceding clause (e.g. Clause 5), wherein the ocean bottom data is acquired for the FWI analysis with the low frequency sources, where a source line interval between source lines is at least equal to or greater than 600 meters.

Clause 7: The method of any preceding clause (e.g. Clause 1), wherein the parameters (e.g. associated with the ocean bottom sensors and the seismic sources) include a number of source vessels, a number of sources per vessel, a separation between sources, a speed of the source vessel, a source firing scheme, and variations of a source grid separation in the seismic survey.

Clause 8: The method of any preceding clause (e.g. Clause 1), wherein the ocean bottom sensors are spaced apart from one another by distances between 800 meters to 1600 meters, and where the ocean bottom sensors are disposed in ocean bottom nodes.

Clause 9: The method of any preceding clause (e.g. Clause 8), wherein a source grid is denser than a node grid, where the seismic sources are separated by a smaller fraction of a wavelength of the seismic wavefields, comprising 50 meters, 100 meters, or any other intervals.

Clause 10: The method of any preceding clause (e.g. Clause 1), wherein one or more marine streamers are towed by one or more vessels towing the seismic sources.

Clause 11: The method of any preceding clause (e.g. Clause 10), wherein sensors in the one or more marine streamers towed by the one or more vessels measure the seismic wavefields generated by the seismic sources.

Clause 12: The method of any preceding clause (e.g. Clause 1), wherein the seismic sources are obtained using pneumatic sources or marine vibrators.

Clause 13: The method of any preceding clause (e.g. Clause 12), wherein the pneumatic sources are activated with time delays designed to improve efficiency and illumination of subsurface.

Clause 14: The method of any preceding clause (e.g. Clause 13), wherein the time delays vary in a range from zero to a duration that extends beyond the maximum reflection time from a deep event of interest.

Clause 15: The method of any preceding clause (e.g. Clause 14), wherein the method includes separating the seismic wavefields from different seismic sources of the seismic sources using the time delays.

Clause 16: The method of any preceding clause (e.g. Clause 12), wherein the seismic sources include the marine vibrators to activate sweeps to improve efficiency and illumination of subsurface.

Clause 17: The method of any preceding clause (e.g. Clause 16), wherein the method includes separating the seismic wavefields from different seismic sources using the sweeps.

Clause 18: The method of any preceding clause (e.g. Clause 17), wherein the sweeps tune low frequencies for sparse geometries.

Clause 19: The method of any preceding clause (e.g. Clause 12), wherein the seismic sources include the marine vibrators and exclude the pneumatic sources.

Clause 20: In certain embodiments, a system is provided for performing a seismic survey according to aspects of any preceding clause. The system may include one or more processors and one or more memories. The memories may include instructions that, when executed by the one or more processors, cause the one or more processors to: deploy ocean bottom sensors at a water bottom in a seismic survey, where the ocean bottom sensors are spaced at regular or irregular intervals; activate a seismic sources at a positions configured to provide sampling of seismic wavefields including reflection waves and diving waves, where the seismic sources include different types of seismic sources towed by the same or by different vessels and fired simultaneously or independently; record, via the ocean bottom sensors, the seismic wavefields generated by the seismic sources; and determine a parameters associated with the ocean bottom sensors and the seismic sources based at least on a FWI analysis.

Clause 21: The system of the preceding clause (e.g. Clause 20), wherein the instructions, when executed by the one or more processors, cause the one or more processors to implement the method of any preceding clause (e.g. Clauses 1 to 19).

Clause 22: In certain embodiments, a non-transitory computer-readable medium is provided with instructions for implementing the method of any preceding clause (e.g. Clauses 1 to 19).

Clause 23: In certain embodiments, a computer program is provided with instructions for implementing the method of any preceding clause (e.g. Clauses 1 to 19).

Clause 24: In certain embodiments, a method is provided that includes receiving a legacy seismic dataset comprising at least one legacy seismic datatype selected from a group comprising of a velocity model, frequency content information, diving wave information, noise information, geologic information, acquisition geometry information, and seismic data associated with a survey area; analyzing the legacy seismic dataset based at least in part on the at least one legacy seismic datatype to design for the survey area an OBN survey configured to complement the legacy seismic dataset; receiving seismic wavefields that were generated by a plurality of seismic sources and collected by a plurality of ocean bottom sensors; generating an improved legacy seismic datatype based at least in part on a perturbation of the at least one legacy seismic data type and the seismic wavefields; and determining a plurality of parameters associated with the plurality of ocean bottom sensors and the plurality of seismic sources based at least on a FWI analysis of the seismic wavefields, and optionally the improved legacy seismic datatype.

Clause 25: The method of any preceding clause (e.g. Clause 24), wherein the perturbation of the at least one legacy seismic data type includes perturbing the velocity model.

Clause 26: The method of any preceding clause (e.g. Clause 25), wherein the improved legacy seismic datatype comprises a revised velocity model.

Clause 27: The method of any preceding clause (e.g. Clause 26), comprising reprocessing the legacy seismic dataset based at least in part on the revised velocity model.

Clause 28: The method of any preceding clause (e.g. Clause 24), wherein the plurality of parameters comprises a number of source vessels, a number of sources per vessel, a separation between sources, a speed of the source vessel, a source firing scheme, and variations of a source grid separation in the seismic survey.

Clause 29: The method of any preceding clause (e.g. Clause 24), wherein the plurality of seismic sources comprises low frequency sources configured to compensate for a sparsity in a source or ocean bottom sensor grid.

Clause 30: The method of any preceding clause (e.g. Clause 24), wherein the designed OBN survey includes a plurality of shot point locations for the plurality of seismic sources

Clause 31: The method of any preceding clause (e.g. Clause 24), wherein the designed OBN survey includes respective placement locations for respective sensors in the plurality of ocean bottom sensors.

Clause 32: A method for designing an OBN survey based at least in part on a legacy seismic dataset associated with a survey area, comprising: receiving the legacy seismic dataset comprising at least one legacy seismic datatype selected from a group comprising of a velocity model, frequency content information, diving wave information, noise information, geologic information, acquisition geometry information, and seismic data associated the survey area; and analyzing the legacy seismic dataset based at least in part on the at least one legacy seismic datatype to generate OBN placement information to collect an OBN survey configured to complement the legacy seismic dataset by improving the at least one legacy seismic datatype.

Clause 33: The method of any preceding clause (e.g. Clause 32), wherein the OBN placement information is indicative of a plurality of OBN placement locations within the survey area.

Clause 34: The method of any preceding clause (e.g. Clause 32), wherein the OBN placement information is indicative of a plurality of seismic source shot locations within the survey area.

Clause 35: The method of any preceding clause (e.g. Clause 32), comprising receiving the OBN survey.

Clause 36: The method of any preceding clause (e.g. Clause 35), comprising generating an improved legacy seismic datatype based at least in part on the OBN survey and the legacy seismic dataset.

Clause 37: The method of any preceding clause (e.g. Clause 36), wherein the improved legacy seismic datatype comprises a revised velocity model.

Clause 38: The method of any preceding clause (e.g. Clause 37), comprising reprocessing the legacy seismic dataset based at least in part on the revised velocity model.

Clause 39: The method of any preceding clause (e.g. Clause 36), comprising generating a seismic dataset associated with the survey area based at least in part on the improved legacy seismic datatype, the OBN survey, and the legacy seismic dataset.

Clause 40: The method of any preceding clause (e.g. Clause 32), comprising generating a model associated with the survey area, wherein the model comprises well data and the at least one legacy seismic datatype.

Clause 41: The method of any preceding clause (e.g. Clause 35), wherein the at least one legacy seismic datatype comprises the velocity model.

Clause 42: The method of any preceding clause (e.g. Clause 41), comprising generating a synthetic seismic dataset associated with the survey area based at least in part on the velocity model.

Clause 43: The method of any preceding clause (e.g. Clause 42), comprising analyzing a diving wave illumination associated with the survey area based at least in part on the synthetic seismic dataset.

Clause 44: The method of any preceding clause (e.g. Clause 42), comprising analyzing an FWI kernel illumination associated with the survey area based at least in part on the synthetic seismic dataset.

Clause 45: The method of any preceding clause (e.g. Clause 43 or 44), comprising perturbing the velocity model before analyzing the diving wave illumination or analyzing the FWI kernel illumination.

Clause 46: The method of any preceding clause (e.g. Clause 32), comprising jointly inverting the OBN survey data and the legacy seismic dataset to form a joint seismic dataset.

Clause 47: The method of any preceding clause (e.g. Clause 32), comprising jointly migrating the OBN survey data and the legacy seismic dataset to form a joint seismic dataset.

Clause 48: The method of any preceding clause (e.g. Clause 46 or 47), further comprising displaying an image of the joint seismic dataset.

While only certain features of the invention have been illustrated and described herein, many modifications and changes will occur to those skilled in the art. It is, therefore, to be understood that the appended claims are intended to cover all such modifications and changes as fall within the true spirit of the invention.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [perform]ing [a function] ... " or "step for [perform]ing [a function] ... ," it is intended that such elements are to be interpreted under 35 U.S.C. § 112(f). However, for any claims containing elements designated in any other manner, it is intended that such elements are not to be interpreted under 35 U.S.C. § 112(f).

**Claims**

1. A method, comprising:

receiving a legacy seismic dataset comprising at least one legacy seismic datatype selected from a group comprising of a velocity model, frequency content information, diving wave information, noise information, geologic information, acquisition geometry information, and seismic data associated with a survey area;
analyzing the legacy seismic dataset based at least in part on the at least one legacy seismic datatype to design for the survey area an ocean bottom node, OBN, survey configured to complement the legacy seismic dataset;

receiving seismic wavefields that were generated by a plurality of seismic sources and collected by a plurality of ocean bottom sensors;

generating an improved legacy seismic datatype based at least in part on a perturbation of the at least one legacy seismic data type and the seismic wavefields; and

determining a plurality of parameters associated with the plurality of ocean bottom sensors and the plurality of seismic sources based at least on a full waveform inversion, FWI, analysis of the seismic wavefields.

2. The method of claim 1,

wherein the perturbation of the at least one legacy seismic data type includes perturbing the velocity model,

optionally wherein the improved legacy seismic datatype comprises a revised velocity model, and/or

optionally comprising reprocessing the legacy seismic dataset based at least in part on the revised velocity model.

3. The method of claim 1 or 2, wherein the plurality of parameters comprises a number of source vessels, a number of sources per vessel, a separation between sources, a speed of the source vessel, a source firing scheme, and variations of a source grid separation in the seismic survey.

4. The method of claim **1, 2** or 3, wherein the plurality of seismic sources comprises low frequency sources configured to compensate for a sparsity in a source or ocean bottom sensor grid.

5. The method of any preceding claim, wherein the designed OBN survey includes at least one of:

a plurality of shot point locations for the plurality of seismic sources; and

respective placement locations for respective sensors in the plurality of ocean bottom sensors.

6. The method of any preceding claim, further comprising designing the OBN survey based at least in part on the legacy seismic dataset associated with the survey area, the designing comprising:

receiving the legacy seismic dataset comprising at least one legacy seismic datatype selected from a group comprising of a velocity model, frequency content information, diving wave information, noise information, geologic information, acquisition geometry information, and seismic data associated the survey area; and

analyzing the legacy seismic dataset based at least in part on the at least one legacy seismic datatype to generate OBN placement information to collect an OBN survey configured to complement the legacy seismic dataset by improving the at least one legacy seismic datatype.

7. The method of claim 6, wherein the OBN placement information is indicative of at least one of:

a plurality of OBN placement locations within the survey area; and

a plurality of seismic source shot locations within the survey area.

8. The method of claim 6 or 7, comprising receiving the OBN survey.

9. The method of claim 8, comprising generating an improved legacy seismic datatype based at least in part on the OBN survey and the legacy seismic dataset.

10. The method of claim 9,

wherein the improved legacy seismic datatype comprises a revised velocity model, optionally wherein the method comprises reprocessing the legacy seismic dataset based at least in part on the revised velocity model, and/or

wherein the method comprises generating a seismic dataset associated with the survey area based at least in part on the improved legacy seismic datatype, the OBN survey, and the legacy seismic dataset.

11. The method of any of claims 6 to 10, comprising generating a model associated with the survey area, wherein the model comprises well data and the at least one legacy seismic datatype.

12. The method of any of claims 6 to 11, wherein the at least one legacy seismic datatype comprises the velocity model, optionally wherein the method comprises generating a synthetic seismic dataset associated with the survey area based at least in part on the velocity model.

13. The method of claim 12, comprising at least one of:

analyzing a diving wave illumination associated with the survey area based at least in part on the synthetic seismic dataset; and

analyzing an FWI kernel illumination associated with the survey area based at least in part on the synthetic seismic dataset,
optionally wherein the method comprises perturbing the velocity model before analyzing the diving wave illumination or analyzing the FWI kernel illumination.

14. The method of any of claims 6 to 13, comprising jointly inverting and/or jointly migrating the OBN survey data and the legacy seismic dataset to form a joint seismic dataset.

15. The method of claim 14, further comprising displaying an image of the joint seismic dataset.

FIG. 1

| | |
|---|---|
| 82 | SEISMIC RECORDERS |
| 86 | PROCESSOR |
| 88 | MEMORY |
| 90 | STORAGE |
| 92 | DISPLAYS |

FIG. 2

FIG. 3

FIG. 4

FIG. 5

FIG. 6

FIG. 7

FIG. 8

FIG. 9

FIG. 10

FIG. 11A

180
182
20
Y
122
X
120

FIG. 11B

190
122
Y
X
120
192

FIG. 11C

200
122
Y
X
120
202

FIG. 12A

FIG. 12B

FIG. 12C

240

242

Y
122
X
120

20 244 25

**FIG. 13A**

250

**FIG. 13B**

252
254
Y
122
X
120

260

262

Y
122
X
120

264

**FIG. 13C**

FIG. 14A

FIG. 14B

FIG. 14C

FIG. 15

FIG. 16

FIG. 17

FIG. 18

~600

DETERMINE OCEAN BOTTOM NODE (OBN) ACQUISITION PARAMETERS BASED ON FULL WAVEFORM INVERSION (FWI) ANALYSIS ~602

DEPLOY OCEAN BOTTOM NODES OF SENSORS SPACED AT REGULAR OR IRREGULAR INTERVALS FOR A SEISMIC SURVEY AT WATER BOTTOM ~604

ACTIVATE MULTIPLE SEISMIC SOURCES INCLUDING DIFFERENT TYPES OF SEISMIC SOURCES TOWED BY SAME OF DIFFERENT VELLELS AND FIRED SIMULTANEOUSLY OR INDEPENDENTLY AT POSITIONS DESIGNED TO HAVE DESIRED SAMPLING OF WAVEFIELD INCLUDING REFLECTION AND DIVING WAVES ~606

RECORD THE SEISMIC WAVEFIELD GENERATED BY THE SEISMIC SOURCES WITH THE SENSORS IN THE OCEAN BOTTOM NODES ~608

FIG. 19

─700

RECEIVE LEGACY SEISMIC DATASET ~702

ANALYZE THE LEGACY SEISMIC DATASET TO DESIGN AN OBN SURVEY ~704

GENERATE AN IMPROVED LEGACY SEISMIC DATASET ~706

FIG. 20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63383424